# EUROPÄISCHE PATENTANMELDUNG

(11) **EP 1 190 845 A1**
(43) Veröffentlichungstag der Anmeldung: **27.03.2002**
(21) Anmeldenummer: 01122409.4
(22) Anmeldetag: 20.09.2001
(51) Int. Cl.: B32B 15/08, B65D 65/40, E04B 1/80

(54) **Metallisierte Filme enthaltende Folienlaminate als Hochbarrierefolien und deren Verwendung für Vakuumisolierpaneele**

(30) Priorität: 22.09.2000 DE 10047043
(71) Anmelder: Wipak Walsrode GmbH & Co. KG, 29656 Walsrode (DE)
(72) Erfinder: Jacobsen, Sven, Dr., 29683 Fallingbostel (DE); Kuckertz, Christian, Dr., 57462 Olpe (DE); Brandt, Rainer, Dr., 29664 Walsrode (DE)
(74) Vertreter: Kutzenberger, Helga, Dr.

(57) **Zusammenfassung**

Beschrieben wird ein mehrschichtiges Folienlaminat mit mindestens 4 Schichten umfassend mindestens eine außen liegende mit Aluminium oder SiOₓ oder einem Metalloxid der 2. oder 3. Hauptgruppe bedampfte Schicht (I), eine Gassperrschicht (II), mindestens eine weitere mit Aluminium oder SiOₓ oder einem Metalloxid der 2. oder 3. Hauptgruppe bedampfte Schicht (III) und eine Heißsiegelschicht (IV), wobei die bedampfte Oberfläche der Schicht I an die nächste Schicht angrenzt.

Ebenfalls beschrieben wird deren Verwendung als Umhüllungsmaterial von Vakuumisolierpaneelen.

## Beschreibung

Die vorliegende Erfindung betrifft Folienlaminate, die als Hochbarrierefolien besonders gasdiffusionsdicht sind, und die Verwendung dieser gasdiffusionsdichten Folienlaminate als Umhüllung von Vakuumisolierpaneelen.

Bei einigen speziellen technischen Produkten wie zum Beispiel der Herstellung von Vakuumisolierpaneelen (VIP) sind Folien erforderlich, die äußerst geringe Gasdiffusionswerte besitzen, um zu garantieren, dass das einmal angelegte Vakuum und damit die Funktionsfähigkeit der VIP über einen sehr langen Zeitraum (10-15 Jahre) erhalten bleiben.

Übliche Sperrschichtfolien aus Kunststoffen, wie beispielsweise in der EP-A 0 517 026 beschrieben, erreichen nicht die erforderliche Gassperrwirkung. Verbunde, die eine Aluminiumfolie enthalten, besitzen zwar eine totale Gassperre, sind aber in vielen Anwendungen bedingt durch die Wärmeleitfähigkeit des Aluminiums nicht erwünscht.

Darüberhinaus sind metallisierte oder mit SiOₓ bedampfte Folien bekannt, die die Nachteile bezüglich der Wärmeleitfähigkeit der reinen Metallfolien vermeiden (wie zum Beispiel in EP-A 0 878 298 beschrieben) und höhere Sperrwirkungen als reine Kunststofffolien erzielen, deren Werte aber weit von den geforderten Gassperrwerten entfernt sind.

Unter Vakuumisolierpaneelen (VIP) versteht man plattenförmige Gebilde, die aus einem Dämm- und/ oder Füllstoff bestehen und von einer Hochbarrierefolie umhüllt vakuumverpackt sind. Die Art und insbesondere die Höhe des Vakuums sind dabei von dem verwendeten Dämm- oder Füllstoff und der verlangten Isolationswirkung des VIP abhängig. Die Umhüllung mit einer Hochbarrierefolie verhindert über die Lebensdauer des VIP die Diffusion von Gasen, die das Vakuum und damit die Isolationswerte des VIP verschlechtern. Metallfolien sind dafür als Hochbarrierefolien unerwünscht, da diese über die Kanten des plattenförmigen VIP Wärme leiten und damit die Isolationsleistung verringern.

Aufgabe der vorliegenden Erfindung war es daher, Folienlaminate bereitzustellen, die eine besonders hohe Gassperrwirkung ohne eine wärmeleitende Metallfolie als Schicht aufweisen. Dabei sollten gleichzeitig mechanische und thermische Eigenschaften des Folienlaminats verbessert werden. Insbesondere sollen Folienlaminate zur Verfügung gestellt werden, die als Umhüllungsmaterial zur Herstellung von Vakuumisolierpaneelen (VIP) geeignet sind.

Erfindungsgemäß gelingt dies durch Bereitstellung eines mehrschichtigen Folienlaminats umfassend mindestens 4 unmittelbar oder mittelbar aufeinanderfolgende Schichten I bis IV, wobei
als außen liegende Schicht I mindestens eine mit Aluminium oder SiOₓ oder einem Metalloxid der zweiten oder dritten Hauptgruppe bedampfte Schicht, deren bedampfte Oberfläche an die nächste Schicht angrenzt,
als Schicht II eine Gassperrschicht aus Kunststoff,
als Schicht III mindestens eine weitere mit Aluminium oder SiOₓ oder einem Metalloxid der zweiten oder dritten Hauptgruppe bedampfte Schicht und
als Schicht IV eine außen liegende Heißsiegelschicht vorliegt.

Bei den erfindungsgemäßen Folienlaminaten würde man zunächst erwarten, dass deren Gassperrwirkung durch die Gassperrwirkung der dafür am besten ausgerüsteten Einzelfolie gegeben ist, beziehungsweise sich aus der Summation der Sperrwirkungen der Einzelfolien errechnet. Man erhält jedoch überraschenderweise Gassperrwirkungen, die nicht nur deutlich höher als die der Einzelfolien liegen, sondern sogar höher als die der Summe der Einzelfolien liegen.

Um darüberhinaus noch weiter gesteigerte Gasdiffusionssperrwerte zu erhalten, können die erfindungsgemäßen Folienlaminate die Schicht (I) und/ oder Schicht (III) bevorzugt mehr als 1 x enthalten, wobei diese Schicht(en) mit Aluminium oder SiOₓ, deren Wert für x 1 bis 2, vorzugsweise 1,5 bis 1,8 beträgt oder einem Metalloxid der 2. oder 3. Hauptgruppe bedampftes Material bedampft oder nicht bedampft sein können, wobei die bedampften Oberflächen der Schichten I und/ oder III vorzugsweise jeweils aneinander grenzen.

Die mit Aluminium oder SiOₓ oder einem Metalloxid der 2. oder 3. Hauptgruppe bedampften Schichten können aus allen üblichen thermoplastischen Kunststoffen bestehen, vorzugsweise aus Kunststoffen wie mindestens einem Polyester, Polyamid, Polyolefin, deren Mischungen oder deren jeweiligen Copolymeren. Weiterhin können diese Schichten I und/ oder III auch aus einem Coextrudat unterschiedlicher Polymere bestehen, wobei dieses Coextrudat mindestens aus einer Schicht, vorzugsweise aus zwei Schichten eines der genannten thermoplastischen Kunststoffe, und einer Gassperrschicht aus Kunststoff, vorzugsweise aus einem verseiften Ethylenvinylazetat Copolymer mit 25 bis 45 Mol% Vinylazetat und vorzugsweise zwischen den 2 Schichten der genannten thermoplastischen Kunststoffe angeordnet, aufgebaut ist. Die Dicke der einzelnen Schicht(en) I und/ oder III und die jeweilige Gesamtdicke ist nicht wesentlich, kann aber die Gassperrwirkung geringfügig beeinflussen und die mechnischen und thermischen Eigenschaften des Folienlaminats mitbestimmen.

Mit den erfindungsgemäßen Folienlaminaten lassen sich Sauerstoffdurchlässigkeitswerte von kleiner 0,1 cm³/m² d bar (23°C, 75% r.h.), vorzugsweise kleiner 0,05 und besonders bevorzugt von ≤ 0,01 und Wasserdampfdurchlässigkeitswerte von ≤ 0,1 g/m² d (38°C, 90% r.h.) erreichen. Dabei wird die Sauerstoffdurchlässigkeit nach DIN 53380-3 und die Wasserdampfdurchlässigkeit nach DIN 53122 bestimmt. Durch die Kombination unterschiedlicher Lagen lassen sich nicht nur die Gasdurchlässigkeitswerte auf die von der Anwendung erforderlichen Werte einstellen, darüberhinaus ist es auch möglich durch Modifikation des Schichtmaterials, das mit Aluminium oder SiOₓ oder einem Metalloxid der 2. oder 3. Hauptgruppe bedampft ist, die mechanischen und/oder thermischen Kennwerte des resultierenden erfindungsgemäßen Laminats zu variieren.

Wird als außen liegende Schicht (I) ein mit Aluminium oder SiOₓ oder einem Metalloxid der 2. oder 3. Hauptgruppe bedampftes Polyamid gewählt, zeichnet sich das entstehende Folienlaminat zusätzlich zu den guten Gassperrwerten durch eine hohe mechanische Stabilität, insbesondere durch eine hohe Durchstichfestigkeit aus, die in der Handhabung der erfindungsgemäßen Folienlaminate Vorteile bietet und damit Beschädigungen der Laminate als Umhüllungsmaterial von VIPs verhindert. Solche VIP müssen sowohl bei der Herstellung als auch beim Einbau in die Endapplikation teilweise große mechanische Belastungen aushalten, die zu einer Beschädigung der Umhüllung und damit der Barriereeigenschaften führen können.

Bevorzugt wird als außen liegende Schicht (I) auch eine mit Aluminium oder SiOₓ oder einem Metalloxid der 2. oder 3. Hauptgruppe bedampfte Schicht auf Basis von Polypropylen gewählt, die sich durch eine besonders gute Wasserdampfsperre auszeichnet. Wird diese außen liegende Schicht mit einer Schicht (III) kombiniert, die aus einem mit Aluminium oder SiOₓ oder einem Metalloxid der 2. oder 3. Hauptgruppe bedampften Schicht auf Basis von Polypropylen besteht, die sich auch durch eine besonders gute Wasserdampfsperre auszeichnet, zeichnet sich das erfindungsgemäße Folienlaminat sowohl durch eine bessere Wasserdampfsperre im Vergleich zu den einzelnen Polypropylenschichten als auch durch eine extrem verbesserte Sauerstoffsperre aus, da die innen liegende Gassperrschicht II aus Polyvinylalkohol vor schädigendem Wasserdampf geschützt ist.

Weiterhin bevorzugt ist als eine oder mehrere der mit Aluminium oder SiOₓ oder einem Metalloxid der 2. oder 3. Hauptgruppe bedampften Schichten I und/ oder III ein Coextrudat, das aus mindestens einer Lage Polyamid (a) und mindestens einer Gassperrlage (b) aus Kunststoff aufgebaut ist. Besonders geeignet ist eine 3-lagige Kombination als Schicht (I) und/oder Schicht (III) aus Polyamid in den Außenlagen des Coextrudats und EVOH als O₂ Gasbarriere in der Innenlage. Die Gassperrlage sorgt beim daraus resultierenden erfindungsgemäßen Folienlaminat für extrem verbesserte Gassperrwerte, wobei bei der Verwendung von EVOH (verseiftem EthylenNinylazetat Copolymer) als Gassperrlage zusätzlich verbesserte Sauerstoffsperrwerte erzielt werden.

In einem besonders bevorzugten Aufbau sind eine oder mehrere der Schichten I und/ oder mit Aluminium, vorzugsweise in einer Dicke von 30 bis 80 nm, bedampft.

Als Materialien für die Heißsiegelschicht (IV) können Homo- oder Copolyolefine eingesetzt werden, vorzugsweise Linear Low Density Polyethylen (LLDPE), Low Density Polyethylen (LDPE), metalocen Polyethylen, Polypropylen (PP), Polybutylen (PB), Ethylenvinylacetat Copolymere (EVA), High Density Polyethylen (HDPE), lonomere (IO) und Mischungen dieser Stoffe, sowie amorphe Polyester wie amorphes Polyethylenterephthalat (aPET). Erfindungsgemäß ist es auch möglich ein mehrschichtiges Coextrudat aus den genannten Materialien als Heißsiegelschicht (IV) zu verwenden. Die Dicke der Heißsiegelschicht (IV) beträgt vorzugsweise 20 bis 200µm, besonders bevorzugt 50 bis 100µm.

Vorzugsweise weist das erfindungsgemäße Folienlaminat für die Verwendung bei VIP eine Siegelschicht IV aus einem leicht fließenden Material, vorzugsweise einem lonomer, auf, das unter den typischen staubigen Produktionsbedingungen bei der VIP Herstellung besonders gasdichte Siegelnähte gewährleistet.

Für die Verbindung zwischen den einzelnen Schichten der erfindungsgemäßen Folienlaminate kommen vorzugsweise handelsübliche Reaktivklebstoffe wie insbesondere Zwei-Komponenten-Polyurethanklebstoffe zum Einsatz. Es können aber auch polyolefinische Haftvermittler, vorzugsweise Polyethylene, Ethylenethylacrylat (EEA) oder Ethylenmethylmethacrylat (EMMA) eingesetzt werden. Die Gassperrwirkung ist nicht wesentlich von der Art der Verbindung der einzelnen Schichten abhängig, der erfindungsgemäßen Folien.

Beim Einsatz von Zwei-Komponenten-Polyurethanklebstoffen ist darauf zu achten, dass die Komponentenzusammensetzung so gewählt wird, dass eine möglichst geringe Gasbildung stattfindet.

Ein weiterer Gegenstand der Erfindung ist die Verwendung der erfindungsgemäßen Folienlaminate als Hochbarrierefolien, d. h. praktisch gasdiffusionsdichte Barrierefolie als Umhüllung einer Vakuumisolierpaneele.

Ein weiterer Gegenstand ist eine Vakuumisolierpaneele, die ein erfindungsgemäßes Folienlaminat als Umhüllung eines Dämm- oder Füllstoffes aufweist. Dabei ist jede Art von Dämm- oder Füllstoffen, wie sie üblicherweise in Vakuumisolierpaneelen eingesetzt werden, möglich, vorzugsweise ein Dämmstoff auf Basis eines offenzelligen Polyurethan oder Polystyrrol-Schaumstoff und/ oder ein Füllstoff auf Basis von Siliziumoxid.

Im Folgenden sind in den Beispielen erfindungsgemäße Folienaufbauten wiedergegeben, die die erfindungsgemäßen Folienlaminate näher beschreiben, die die Erfindung in ihrem Umfang aber nicht begrenzen.

### Beispiele

Ein Folienlaminat A,
aus
(I) einer mit Aluminium bedampften Polyamidschicht, bedampfte Oberfläche zu (la) gewandt
(la) eine mit Aluminium bedampfter Polyesterschicht, bedampfte Oberfläche zu (I) gewandt
(II) eine Polyvinylalkoholschicht als O₂ Sperrschicht
(III) eine mit Aluminium bedampfte Polyesterschicht, bedampfte Seite zu (IV) gewandt
(IV) eine Polyethylen-Heißsiegelschicht

Das oben angeführte Folienlaminat wurde in folgender Weise hergestellt:

Zunächst wurden die mit Aluminium bedampften Solofolien (I) und (la) mit den bedampften Seiten zu einem ersten Vorverbund (VV1) gegeneinander laminiert, um die beiden empfindlichen Beschichtungen für die weiteren Arbeitsgänge vor Beschädigungen zu schützen. Diese Kaschierung wurde mittels eines lösemittelhaltigen, auf Polyurethan basierenden Klebstoffsystems erreicht, dessen Komponenten (Polyisocyanat und Polyol) so stöchiometrisch aufeinander abgestimmt sind, daß während der Klebstoffaushärtung keine CO₂-Bildung auftritt, damit die Verbundfestigkeit nicht beeinflußt wird. Eine Kaschierung in klimatisierten Räumen mit (geringer) definierter Feuchtigkeit ist dabei von Vorteil. Diese prinzipiellen Randbedingungen galten auch für alle weiteren Kaschierungen.

Die mit Aluminium bedampfte Polyesterfolie (III) wird mit der metallisierten Seite gegen die PE-Heißsiegelschicht (IV) kaschiert (Vorverbund VV2).

Eine Polyvinylalkohol-Folie wurde auf den schon vorgefertigten Vorverbund VV1 kaschiert. Dieser ergibt den Vorverbund VV3 wurde durch Kaschierung mit dem schon gefertigten Vorverbund VV2 verbunden. Üblicherweise arbeitet man bei den Kaschierungen mit Kaschiergeschwindigkeiten zwischn 150 und 250m/min. Technisch ist aber jede andere Geschwindigkeit möglich, da diese insbesondere von den maschinentechnischen Gegebenheiten der verwendeten Kaschiemaschine abhängt.

Das so erzeugte erfindungsgemäße Folienlaminat wies eine extrem niedrige Durchlässigkeit für Gase bzw. Wasserdampf auf, so zum Beispiel eine Sauerstoffdurchlässigkeit bei 23°C und 75% relativer Feuchte, gemessen nach DIN 53380-3, die unterhalb der Nachweisgrenze von 0.05 cm³/m²dbar liegt, und eine Wasserdampfdurchlässigkeit bei 38°C und 90% relativer Feuchte von < 0.05 g/m²d, gemessen nach DIN 53122.
Weitere erfindungsgemäße Folienlaminate wurden wie vorstehend angegeben mit dem nachfolgenden Aufbau hergestellt:
B)
   (I) eine mit Aluminium bedampfte Polyamidschicht, bedampfte Seite zu (II) gewandt
   (II) eine Polyvinylalkohol-Schicht
   (III) eine mit Aluminium bedampfte Polyesterschicht, bedampfte Seite zu (II) gewandt
   (IV) eine Polyethylen-Siegelschicht
C)
   (I) eine mit Aluminium bedampfte Polypropylenschicht, bedampfte Seite zu (II) gewandt
   (II) eine Polyvinylalkoholschicht
   (III) eine mit Aluminium bedampfte Polyesterschicht, bedampfte Seite zu (IV) gewandt
   (IV) eine Polyethylen-Siegelschicht
D)
   (I) eine mit Aluminium bedampfte Polyamidschicht, bedampfte Seite zu (II) gewandt
   (II) eine Polyvinylalkoholschicht
   (III) eine mit Aluminium bedampfte Polypropylenschicht, bedampfte Seite zu (IV) gewandt
   (IV) lonomer-Siegelschicht
E)
   (I) ein mit Aluminium bedampftes Coextrudat aus Polyamid/EVOH/Polyamid, bedampfte Seite zu (II)
   (II) eine Polyvinylalkoholschicht
   (III) eine mit Aluminium bedampfte Polyesterschicht, bedampfte Seite zu (IIIa) gewandt
   (IIIa) eine mit Aluminium bedampfte Polyesterschicht, bedampfte Seite zu (III) gewandt
   (IV) eine amorphe Polyethylenterephthalat-Heißsiegelschicht
F)
   (I) eine mit Aluminium bedampfte Polyamidschicht, bedampfte Seite zu (la) gewandt
   (la) eine mit Aluminium bedampfte Polyesterschicht, bedampfte Seite zu (I) gewandt
   (II) eine Polyvinylalkoholschicht
   (III) eine mit Aluminium bedampfte Polyesterschicht, bedampfte Seite zu (IIIa) gewandt
   (IIIa) eine mit Aluminium bedampfte Polyesterschicht, bedampfte Seite zu (III) gewandt
   (IV) eine Polypropylen-Heißsiegelschicht
G)
   (I) eine mit SiOₓ bedampfte Polyamidschicht, bedampfte Seite zu (II) gewandt
   (II) eine Polyvinylalkoholschicht
   (V) eine mit SiOₓ bedampfte Polyesterschicht, bedampfte Seite zu (II) gewandt
   (VI) eine lonomer-Heißsiegelschicht
H)
   (I) eine mit SiOₓ bedampfte Polypropylenschicht, bedampfte Seite zu (II) gewandt
   (II) eine Polyvinylalkoholschicht
   (III) eine mit Aluminium bedampfte Polyesterschicht, bedampfte Seite zu (II) gewandt
   (IV) eine Polyethylen-Siegelschicht

Die Sauerstoffdurchlässigkeit sämtlicher Folienlaminate B) bis H) lag unterhalb der Nachweisgrenze von 0,05 cm³/ m² d bar gemessen nach DIN 53380-3.

## Patentansprüche

1. Mehrschichtiges Folienlaminat umfassend mindestens 4 unmittelbar oder mittelbar aufeinanderfolgende Schichten I bis IV, wobei
als außen liegende Schicht I mindestens eine mit Aluminium oder SiOₓ oder einem Metalloxid der zweiten oder dritten Hauptgruppe bedampfte Schicht, deren bedampfte Oberfläche an die nächste Schicht angrenzt,
als Schicht II eine Gassperrschicht aus Kunststoff,
als Schicht III mindestens eine weitere mit Aluminium oder SiOₓ oder einem Metalloxid der zweiten oder dritten Hauptgruppe bedampfte Schicht und
als Schicht IV eine außenliegende Heißsiegelschicht vorliegt.

2. Mehrschichtiges Folienlaminat nach Anspruch 1, **dadurch gekennzeichnet, daß** es ein Kunststoffolienlaminat ist.

3. Mehrschichtiges Folienlaminat nach Anspruch 1 oder 2, **dadurch gekennzeichnet, daß** die Gassperrschicht II eine Schicht aus Polyvinylalkohol ist.

4. Mehrschichtiges Folienlaminat nach einem der Ansprüche 1 bis 3, **dadurch gekennzeichnet, daß** die bedampfte Schicht I bzw. III auf einen thermoplastischen Kunststoff, vorzugsweise mindestens einem Polyester, mindestens einem Polyamid, mindestens einem Polyolefin oder einem jeweiligen Copolymeren, basiert.

5. Mehrschichtiges Folienlaminat nach einem der Ansprüche 1 bis 4, **dadurch gekennzeichnet, daß** die Schicht I und die Schicht III auf identischen Kunststoffen oder unterschiedlichen Kunststoffen basiert, vorzugsweise auf unterschiedlichen Kunststoffen.

6. Mehrschichtiges Folienlaminat nach einem der Ansprüche 1 bis 5, **dadurch gekennzeichnet, daß** die Schicht I und/oder die Schicht III mindestens zweimal vorliegt, wobei vorzugsweise die bedampften Oberflächen jeweils aneinander grenzen.

7. Mehrschichtiges Folienlaminat nach Anspruch 6, **dadurch gekennzeichnet, daß** die Schichten I auf unterschiedlichen Kunststoffen basieren, vorzugsweise auf Polyamid und Polyester oder Polypropylen und Polyester.

8. Mehrschichtiges Folienlaminat nach Anspruch 6 oder 7, **dadurch gekennzeichnet, daß** die Schichten III auf identischen Kunststoffen basieren, vorzugsweise Polyester.

9. Mehrschichtiges Folienlaminat nach einem der Ansprüche 1 bis 8, **dadurch gekennzeichnet, daß** die Schicht I und/oder III aus einem Coextrudat aus wenigstens zwei Schichten, vorzugsweise umfassend eine Kunststoffgassperrschicht, vorzugsweise eine Sauerstoffsperrschicht, aufgebaut ist.

10. Mehrschichtiges Folienlaminat nach Anspruch 9, **dadurch gekennzeichnet, daß** das Coextrudat aus zwei Polyamidschichten (a) und einer dazwischen liegenden Gassperrschicht (b), vorzugsweise aus einem verseiften Ethylenvinylazetat-Copolymeren besteht.

11. Mehrschichtiges Folienlaminat nach einem oder mehreren der Ansprüche 1 bis 10, **dadurch gekennzeichnet, daß** die Heißsiegelschicht IV aus einem thermoplastischen Kunststoff, vorzugsweise auf einem Homo- oder Copolyolefin, vorzugsweise auf LDPE, LLDPE, Polypropylen, Polybutylen, metallocen Polyethylen, Polyethylen hoher Dichte einem Ethylen/ Propylencopolymeren, einem Ethylenvinylacetat-Copolymeren, einem amorphen Polyester, vorzugsweise einem amorphen Polyethylenterephthalat, oder einem lonomer basiert.

12. Mehrschichtiges Folienlaminat nach einem oder mehreren der Ansprüche 1 bis 11, **dadurch gekennzeichnet, daß** die Schicht bzw. die Schichten I und/oder die Schicht bzw. die Schichten III mit dem identischen Material bedampft sind.

13. Mehrschichtiges Folienlaminat nach Anspruch 12, **dadurch gekennzeichnet, daß** das Material Aluminium ist.

14. Mehrschichtiges Folienlaminat nach einem der Ansprüche 1 bis 13, **dadurch gekennzeichnet, daß** die aufgedampfte Schicht eine Dicke von 30 bis 80 nm aufweist.

15. Vakuumisolierpaneele mit einer hermetisch verschlossenen Umhüllung aus einem mehrschichtigen Folienlaminat gemäß einem der Ansprüche 1 bis 14, wobei die Schicht I nach außen gerichtet ist.

16. Vakkuumisolierpanele nach Anspruch 14, **dadurch gekennzeichnet, daß** sie einen Dämmstoff auf Basis von offenzelligem Polyurethan-, Polystyrrol-Schaum und/ oder einen Füllstoff auf Basis von Siliziumoxid enthält.

17. Verwendung eines mehrschichtigen Folienlaminats nach einem oder mehreren der Ansprüche 1 bis 13 als gasdiffusionsdichte Umhüllung einer Vakuumisolierpaneele, wobei die Schicht I nach außen gerichtet ist.
